(19) Europäisches Patentamt
European Patent Office
Office européen des brevets

(11) **EP 2 119 196 B1**

(12) **FASCICULE DE BREVET EUROPEEN**

(45) Date de publication et mention
de la délivrance du brevet:
**24.07.2013 Bulletin 2013/30**

(21) Numéro de dépôt: **08761953.2**

(22) Date de dépôt: **21.01.2008**

(51) Int Cl.:
*H04L 29/06* (2006.01)     *H04L 29/12* (2006.01)
*H04L 29/14* (2006.01)

(86) Numéro de dépôt international:
**PCT/FR2008/050085**

(87) Numéro de publication internationale:
**WO 2008/107597 (12.09.2008 Gazette 2008/37)**

(54) **GESTION DE SERVICE DANS UN RESEAU**

DIENSTVERWALTUNG IN EINEM NETZWERK

SERVICE MANAGEMENT IN A NETWORK

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **06.02.2007 FR 0700830**

(43) Date de publication de la demande:
**18.11.2009 Bulletin 2009/47**

(73) Titulaire: **FRANCE TELECOM
75015 Paris (FR)**

(72) Inventeurs:
• **BOUCADAIR, Mohamed
F-14000 Caen (FR)**
• **NOISETTE, Yoann
F-14320 May Sur Orne (FR)**

(74) Mandataire: **Cabinet Plasseraud
52, rue de la Victoire
75440 Paris Cedex 09 (FR)**

(56) Documents cités:
**WO-A-2006/128147     CN-A- 1 870 689**

• **HARDWICK J: "Session Border Controllers -
Enabling the VoIP Revolution" INTERNET
CITATION, [Online] février 2005 (2005-02),
XP002362943 Extrait de l'Internet: URL:http:
//www.dataconnection.com/network/ download/
whitepapers/sessionbor dercontroller.pdf>
[extrait le 2006-01-11]**

**Description**

La présente invention se rapporte à un service sur IP (pour 'Internet Protocol'), notamment à la téléphonie sur IP dite « Voix sur IP » (pour « Voice over IP » en anglais).

La téléphonie sur IP permet avantageusement, d'une part, une réduction du coût des communications téléphoniques par rapport à la téléphonie classique, et d'autre part, le couplage de la téléphonie avec les fonctions et services de l'informatique et des réseaux IP.

Or, un service de téléphonie est un service temps réel qui requiert un niveau de disponibilité et de robustesse relativement élevé. Dans le contexte de la téléphonie classique (RTC pour 'Réseau Téléphonique Commuté'), basée sur une commutation circuit, ce niveau de robustesse et de disponibilité est obtenu par la mise en oeuvre de méthodes qui ne sont pas applicables à la téléphonie sur IP, qui, elle, ne se base pas sur une commutation circuit.

Un réseau IP offrant un service de téléphonie comprend classiquement une plateforme de service, ainsi que des équipements d'accès au service, ou encore POP (pour 'Point Of Presence' en anglais), qui sont en charge de gérer l'accès des terminaux clients utilisateurs du réseau IP considéré.

Classiquement, à ces POP sont associés des équipements de gestion de session en bordure (en anglais 'Border Session Controller' ou BSC, ou encore Session Border Controller ou SBC), dont les principales fonctions ont été identifiées dans le document 'Requirements from Session Initiation Protocol Session Border Control Deployments', de J. Hautakorpi et al., draft-ietf-sipping-sbc-funcs-00.txt, Novembre 2006. Ces SBC sont situés entre les terminaux clients et les plateformes du service de téléphonie IP. Un SBC est en général situé dans un POP d'accès du réseau IP (sans que cela soit pour autant une condition nécessaire pour le fonctionnement du service de téléphonie) et représente, pour un terminal client donné, un point d'entrée unique au service de téléphonie. Une telle gestion de l'accès à un service permet de masquer, aux terminaux clients, la plateforme de service et, de manière plus générale, l'architecture du réseau mise en oeuvre par un opérateur. Il est alors possible de garantir une étanchéité de service.

Les SBC correspondent à un point de passage à la fois pour les flux de signalisation, visant à établir une communication, et pour les flux média qui transitent entre les terminaux clients. Les flux de signalisation peuvent viser l'établissement d'une communication, par exemple sur la base de protocoles tels que SIP (pour 'Session Initiation Protocol'), ou encore H.323, tel que défini par l'ITU-T (pour 'International Telecommunication Union Telecommunication Standardization Section'), ou bien IAX (pour 'Inter-Asterisk eXchange Version 2') tel que défini dans le document draft-guy-iax-02, Work In Progress, Octobre 2006 de Spencer, Shumard, Capouch et Guy. Les flux média, quant à eux, peuvent être échangés entre terminaux clients, selon des protocoles de type RTP (pour 'Real-Time Transport Protocol' en anglais) ou encore de type IAX.

Un SBC reçoit alors, d'une part, des messages de signalisation depuis la plateforme de service, ou respectivement depuis les terminaux clients. Puis, après traitement de ces messages, le SBC les relaie vers les terminaux clients, ou respectivement vers la plateforme de service.

Ensuite, lorsqu'un flux média est échangé depuis un premier terminal client vers un second terminal client du service, qui sont respectivement associés à un premier et un second SBC, ce flux média est reçu au niveau du premier SBC, puis relayé vers le second SBC, ce dernier étant alors en charge de transmettre ce flux média à destination du second terminal client. En procédant ainsi, les terminaux clients ne peuvent pas communiquer directement entre eux, l'étanchéité de service étant ainsi garantie.

On peut également noter que les SBC peuvent aussi assurer d'autres fonctions telles qu'une fonction de filtrage ou bien encore une fonction de translation d'adresses pour des offres reposant sur le protocole IPv4.

Ainsi, de par leur rôle dans un réseau de téléphonie IP, les SBC apparaissent comme des noeuds potentiels de concentration de pannes, pouvant entraîner une rupture du service offert aux clients dont les terminaux seraient gérés par un SBC touché.

Afin d'augmenter la résistance aux pannes dans un tel réseau, et de transporter de manière efficace et robuste les messages de signalisation permettant l'établissement des communications ainsi que le transport des flux média entre les terminaux clients, on prévoit classiquement de mettre en place des SBC de secours (ou 'backup' en anglais), de telle sorte que l'on puisse substituer un SBC de secours à un SBC défectueux. Une telle architecture requiert que le SBC de secours présente une configuration et un comportement identiques au SBC auquel il doit se substituer, tant vis-à-vis des terminaux clients que de la plateforme de service.

On entend par le terme 'réseau' non seulement la couche réseau, c'est-à-dire la couche 3, du modèle OSI (pour 'Open System Interconnection' en anglais), mais aussi toute interconnexion entre différents équipements.

Toutefois, la mise en place de tels équipements de secours présente de nombreux désavantages.

Tout d'abord, la duplication de SBC au sein d'un POP est coûteuse, d'autant plus que les SBC ont en charge de plus en plus de fonctionnalités différentes. Cette solution représente également un surcoût du service, requérant notamment une alimentation électrique séparée et des locaux techniques de superficie plus grande.

De plus, la détection des pannes et la gestion d'un basculement depuis un équipement SBC défectueux vers un SBC de secours reposent classiquement sur des mécanismes propriétaires au constructeur de ces équipements qui, de ce fait, ne sont généralement pas compatibles entre eux.

En outre, plus le nombre de SBC attachés à une plateforme de service est grand, plus le coût d'entretien est élevé, ainsi que le coût relatif au maintien de la synchronisation entre le SBC qui pourrait être défectueux, d'une part, et le ou les SBC de secours, d'autre part.

Le document WO 2006/128147 décrit un système dans lequel il est prévu un équipement de réseau de secours au cas où un équipement de réseau actif tombe en panne. La commutation depuis l'équipement de réseau actif vers l'équipement de réseau de secours est mise en oeuvre sur la base d'une adresse virtuelle.

Le document CN 1 870 689 présente un système dans lequel il est prévu d'utiliser un contrôleur de secours pour qu'un terminal s'enregistre auprès d'un autocommutateur, lorsque le contrôleur principal tombe en panne.

La présente invention vient améliorer la situation.

Un premier aspect de la présente invention propose un procédé de gestion d'un service offert à un utilisateur d'un terminal dans un réseau comprenant au moins des premier et second contrôleurs de session en bordure (SBC), au moins une adresse identique étant affectée aux premier et second contrôleurs de session en bordure,

un routeur raccordant le terminal au premier contrôleur de session en bordure et étant adapté pour gérer dynamiquement une table de routage indiquant au moins des première et seconde routes pour ladite adresse,

dans lequel un message émis depuis le terminal à destination de ladite adresse du réseau est reçu au niveau du premier contrôleur de session en bordure lorsque le routeur sélectionne la première route et au niveau du second contrôleur de session en bordure lorsque le routeur sélectionne la seconde route.

La seconde route peut être sélectionnée au moins sur détection de dysfonctionnement du premier contrôleur de session en bordure, étant entendu que l'on peut envisager de déclencher la sélection de la seconde route dans d'autres situations qu'un dysfonctionnement du premier SBC.

Dans le contexte de la présente invention, on entend par les termes 'dysfonctionnement' d'un contrôleur de session en bordure, un problème qui affecte le fonctionnement normal du contrôleur de session en bordure de telle façon que ce contrôleur ne puisse plus assurer son rôle de gestion des communications ou sessions pour les terminaux clients rattachés au POP correspondant. Un tel dysfonctionnement peut aussi être nommé 'panne' par la suite.

Selon l'un des avantages que procure l'invention, il est alors possible de basculer des messages émis depuis un terminal client, qui est géré par le premier contrôleur de session en bordure lorsque ce dernier est opérationnel, sur le second contrôleur de session en bordure en se basant sur une allocation particulière d'adresse dans le réseau considéré. Dans ce contexte, avantageusement, le second contrôleur peut être un contrôleur de session en bordure en charge de la gestion de session pour certains autres terminaux clients. Ainsi, il n'est pas requis d'installer un SBC de secours spécifique pour chaque SBC du réseau. Dans une telle architecture, un SBC principal, c'est-à-dire un SBC qui est en charge de la gestion de session pour des terminaux clients, peut également devenir un SBC de secours pour un autre SBC principal du même réseau. Une telle caractéristique permet de s'affranchir des inconvénients, cités ci-avant, qui sont attachés à la mise en place d'un SBC de secours spécifique. Il n'y a notamment aucun surcoût attaché à la mise en place de SBC de secours.

Il convient de noter qu'un routeur activant un protocole de routage dynamique est adapté pour mettre à jour sa ou ses tables de routage sur la base d'informations de routage reçues régulièrement depuis différentes entités du réseau, via des messages qui sont référencées par la suite sous les termes 'annonces de route'.

Un tel routeur, que l'on peut qualifier de routeur d'accès, est également adapté pour sélectionner une meilleure route lorsque plusieurs routes vers une même destination sont disponibles (sur la base des informations stockées dans sa table de routage). Une telle sélection peut être faite sur la base de critères de sélection prenant en compte des paramètres d'aide à la sélection de route, tels que des niveaux de priorité ou encore des pondérations (encore connues sous le nom de poids administratifs) qui sont affectés aux différentes routes pour une même adresse donnée. Dans ce contexte, il est aisé de faire en sorte que le routeur relié au premier contrôleur de session en bordure mette à jour les paramètres d'aide à la sélection relativement aux différentes routes en fonction de changements qui peuvent se produire dans le réseau, sur la base de mécanismes de routage existants.

En se basant sur des règles de routage bien connues de l'homme du métier, on affecte des adresses aux SBC en tant que SBC principaux, c'est-à-dire dans un mode normal de fonctionnement, de telle sorte que le routeur sélectionne la première route, celle qui conduit au SBC principal, lorsque le SBC principal est opérationnel.

Aucune limitation n'est attachée aux moyens mis en oeuvre pour détecter un dysfonctionnement du premier contrôleur de session en bordure.

On peut notamment prévoir que le routeur et le premier contrôleur mettent en oeuvre respectivement un protocole de routage similaire. Ainsi, un même protocole de routage est activé sur l'interface qui relie le routeur et le premier contrôleur. Dans ce cas, la détection de dysfonctionnement du premier contrôleur de session en bordure peut alors être réalisée sur la base d'informations de routage échangées selon ces protocoles de routage.

Ainsi, avantageusement, le premier contrôleur de session en bordure coopère avec le routeur puisqu'il gère alors une instance du processus de routage.

Dans une variante, le routeur met en oeuvre un processus de détection de panne, tel que par exemple un protocole du type BFD (pour 'Bidirectional Forwarding Detection'), défini notamment dans le document draft-ietf-bfd-base-05, Juin 2006 de D. Katz, et la détection de dysfonctionnement du premier contrôleur de session en bordure est réalisée sur la base de ce processus de détection.

On peut également prévoir de combiner les deux variantes décrites ci-avant.

Dans un mode de réalisation de la présente invention, le réseau comprend un nombre entier N de contrôleurs de session en bordure. Chacun de ces contrôleurs gère un nombre entier M de groupes de terminaux clients, M adresses du réseau étant respectivement associées aux M groupes de terminaux. L'ensemble de ces M adresses du réseau est affecté à chacun des contrôleurs de session en bordure. La table de routage du routeur indique N routes pour chacune des M adresses.

Dans ce contexte, un message émis depuis le terminal à destination du réseau est reçu au niveau du premier contrôleur de session en bordure lorsque le routeur sélectionne la première route et au niveau d'un autre contrôleur de session en bordure, en tant que second contrôleur de session en bordure, parmi les N-1 autres contrôleurs de session en bordure lorsque le routeur sélectionne l'une des N-1 autres routes, en tant que seconde route, l'une des N-1 autres routes étant par exemple sélectionnée sur détection de dysfonctionnement du premier contrôleur de session en bordure.

Ici, le routeur d'accès de chaque contrôleur de session en bordure dispose des N routes dans sa table de routage et est donc en mesure d'effectuer la sélection d'une de ces routes.

Une telle configuration permet avantageusement de mettre en place une gestion de panne du premier contrôleur de session en bordure dans un mode de fonctionnement distribué. En effet, en répartissant les différents terminaux clients gérés par un même SBC au sein de M groupes, et en affectant un même ensemble de M adresses à chacun des N SBC du réseau considéré, on est en mesure, en cas de dysfonctionnement du premier contrôleur, de répartir la charge de la gestion des terminaux clients du premier SBC sur les N-1 autres SBC du réseau. Ainsi, il est possible d'éviter une surcharge qui pourrait se produire lorsque tous les terminaux clients du premier contrôleur de session en bordure sont basculés sur un même autre contrôleur de session en bordure.

Ce mode distribué est basé sur les mêmes principes que ceux exposés ci-dessus dans le contexte du premier et du second SBC.

Il convient de noter qu'il peut être avantageux de répartir les SBC d'un réseau en une pluralité de groupes de SBC, le mécanisme de gestion exposé ci-avant pouvant alors être appliqué de manière indépendante au sein de chaque groupe de SBC.

Une telle répartition en groupe de SBC peut être avantageuse notamment dans le cas où le réseau comprend un nombre important de SBC.

Il convient de noter que pour contrôler la répartition de la charge sur tel ou tel SBC différent du premier SBC, on peut prévoir de mettre en place une stratégie d'ingénierie basée sur une gestion spécifique des métriques, c'est-à-dire des distances qui séparent deux équipements réseau, en nombre de sauts (ou 'hop' en anglais).

Dans un réseau de ce type, un terminal client, avant de requérir une session, ou une communication, procède à son enregistrement. Ainsi, une requête d'enregistrement est émise par le terminal client à destination du premier contrôleur de session en bordure. Cet enregistrement est ensuite transmis à la plateforme de service qui enregistre alors les données relatives à ce terminal client lui permettant de gérer le service requis pour ce dernier.

Lorsque l'enregistrement d'un client, via un terminal, auprès du premier contrôleur de session en bordure est suivi d'un basculement de SBC du premier SBC vers le second SBC, il est alors possible que le terminal émette une requête d'initiation d'appel en tant que premier message reçu par le second SBC depuis ce terminal client. Dans ce cas, il est prévu, dans un mode de réalisation de la présente invention, de mettre en oeuvre les étapes suivantes au niveau du contrôleur de session en bordure :

/1/ recevoir un message d'initiation d'appel en tant que premier message depuis le terminal du client;
/2/ émettre un message d'erreur spécifique à destination du terminal ; et
/3/ recevoir un message d'enregistrement du terminal auprès dudit contrôleur de session en bordure.

Ainsi, lorsque le second contrôleur de session en bordure reçoit une requête d'initiation d'appel depuis un terminal qui ne s'est pas encore enregistré auprès de lui, il émet un message d'erreur spécifique qui indique au terminal qu'un enregistrement préalable est requis.

Classiquement, un client d'un terminal se réenregistre au service régulièrement sur expiration d'un temporisateur d'enregistrement, selon un message de type 'REGISTER' du protocole SIP par exemple. Lorsque, au moment d'un des réenregistrements d'un terminal client, le SBC principal n'est pas opérationnel, le message d'enregistrement est acheminé jusqu'au SBC de secours, selon un mode de réalisation de la présente invention. Ce dernier peut ensuite traiter ce message selon des mécanismes classiques.

On peut en outre prévoir le cas où le basculement du SBC principal vers le SBC de secours est effectué entre l'émission d'un message d'enregistrement et d'un message d'initiation d'appel. Dans ce cas, il n'y a pas eu d'enregistrement de ce terminal client auprès du SBC qui joue le rôle de SBC de secours, avant l'initiation d'appel. Le SBC de secours émet alors un message d'erreur à destination de terminal client, par exemple en introduisant un code d'erreur spécifique (à définir par l'IANA (pour 'Internet Assigned Numbers Authority')). La description de ce code d'erreur peut être de type : « Utilisateur non enregistré. Veuillez vous enregistrer avant » («User Not Registered. Please register first », en anglais). Puis, sur réception de ce message d'erreur spécifique, le terminal client déclenche une phase d'enregistrement.

Le basculement depuis le SBC qui joue le rôle de SBC de secours vers le SBC principal du terminal client considéré, lorsque ce dernier est à nouveau opérationnel, peut être géré de manière similaire.

Selon des mécanismes classiques, lorsque le terminal client s'enregistre auprès du SBC de secours, la plateforme de service est alors informée de ce basculement et met à jour ses données en fonction. Ainsi, dans le sens sortant, c'est-à-dire depuis le réseau IP vers les terminaux clients du réseau, la plateforme de service peut alors acheminer les flux media vers les terminaux clients du SBC principal par l'intermédiaire du SBC de secours.

Toutefois, dans la période pendant laquelle le SBC principal n'est pas opérationnel et les données de la plateforme de service n'ont pas été mises à jour, les flux media sont acheminés vers les terminaux clients via le SBC principal et peuvent de ce fait être perdus. Il convient de noter que cette période reste en règle générale de durée relativement faible, et plus précisément inférieure à 60 secondes.

En outre, il est avantageux de configurer le temporisateur de réenregistrement à une valeur inférieure ou égale à une période de temps pendant laquelle un terminal client peut rester injoignable dans le sens sortant sans que la communication ne soit coupée.

Dans un mode de réalisation de la présente invention, une adresse spécifique est affectée au second contrôleur de session en bordure, et les étapes suivantes sont mises en oeuvre au niveau du second contrôleur de session en bordure :

> /a/ recevoir un message d'initiation d'appel depuis le terminal client ;
> /b/ émettre un message d'information à destination du terminal client indiquant ladite adresse spécifique ;

lesdits messages suivants émis par ledit terminal client étant envoyés à destination de ladite adresse spécifique.

Une telle caractéristique peut être avantageuse car il est en général préférable que les terminaux clients utilisent, dans le sens entrant, c'est à dire depuis les terminaux clients vers la plateforme de service, pour l'envoi des flux médias, une adresse qui ne varie pas en cours de communication. Or, si on prévoit d'utiliser une adresse principale pour la transmission de flux média, et qu'en cours d'appel, le SBC en panne redevient opérationnel, les flux média sont alors réacheminés vers ce SBC principal. Dans ce cas, le SBC principal reçoit des flux médias qu'il n'est pas en mesure de traiter et la communication peut être coupée.

Dans ces conditions, l'adresse spécifique peut être avantageusement destinée à être utilisée pour la transmission de flux média afin d'éviter un tel inconvénient. On peut donc prévoir l'utilisation d'une adresse dédiée à la transmission de flux média, cette adresse étant différente des adresses utilisées pour la signalisation de sorte à éviter une rupture des appels en cours, dans le cas d'un basculement depuis le SBC de secours vers le SBC principal.

Un traitement similaire peut avantageusement être mis en oeuvre pour des requêtes subséquentes relatives à une session qui a été initiée sur le SBC de secours. En effet, pour éviter que, lors du basculement depuis le SBC de secours vers le SBC principal selon un mode de réalisation de la présente invention, des requêtes subséquentes pour une telle session ne soient acheminées vers le SBC principal, les terminaux clients peuvent avantageusement utiliser cette adresse spécifique pour l'émission de ces requêtes subséquentes. Le SBC de secours peut utiliser des mécanismes existants du protocole SIP, par exemple, pour informer les terminaux clients de cette utilisation d'adresse spécifique.

Un deuxième objet de la présente invention propose un système de gestion d'un service offert à un utilisateur d'un terminal le système comprenant :

- au moins des premier et second contrôleurs de session en bordure; au moins une adresse identique étant affectée aux premier et second contrôleurs de session en bordure,
- un routeur raccordant le terminal au premier contrôleur de session en bordure et étant adapté pour gérer dynamiquement une table de routage indiquant au moins des première et seconde routes pour l'adresse,

dans lequel, lorsque le routeur sélectionne la première route, un message émis depuis le terminal à destination de l'adresse du réseau est reçu au niveau du premier contrôleur de session en bordure et lorsque le routeur sélectionne la seconde route, un message émis depuis le terminal à destination de ladite adresse du réseau est reçu au niveau du second contrôleur de session en bordure.

L'invention sera également mieux comprise à l'aide des dessins, sur lesquels :

- la figure 1 illustre un réseau de télécommunications selon un mode de réalisation de la présente invention ;
- les figures 2 et 5 illustrent une gestion de service dans un mode de fonctionnement unilatéral de l'invention;
- les figures 3 et 6 illustrent une gestion de service dans un mode de fonctionnement bilatéral de l'invention ;

- les figures 4 et 7 illustrent une gestion de service dans un mode de fonctionnement distribué de l'invention ;

- la figure 8 illustre une pluralité de scenarii dans un mode de fonctionnement bilatéral de l'invention; et

- la figure 9 illustre un mode de fonctionnement distribué de l'invention mettant en oeuvre une stratégie de métriques.

Dans ces figures, seuls les flux de signalisation sont représentés.

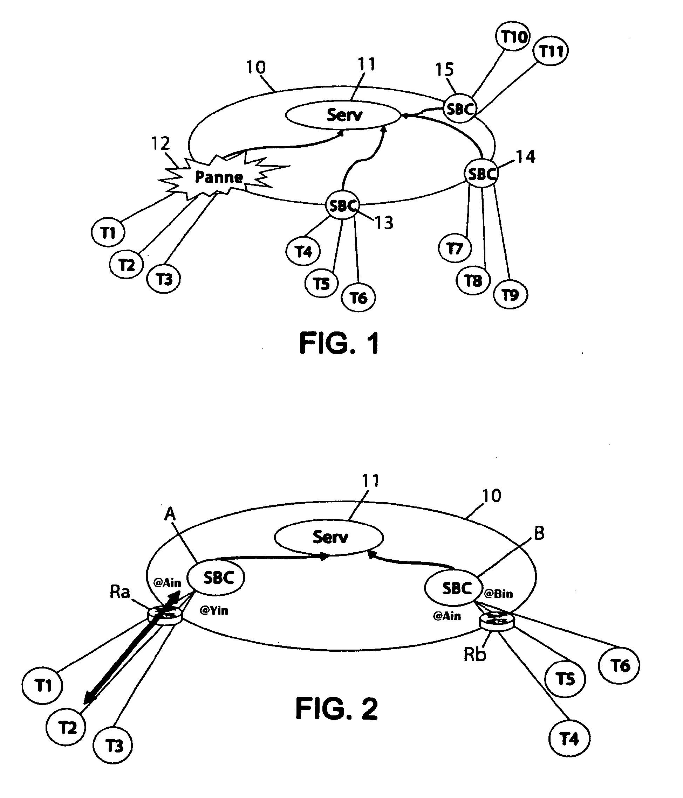

La figure 1 illustre la situation d'un dysfonctionnement, ou une panne, au niveau d'un SBC 12 dans un réseau IP 10 comprenant une plateforme de service sur IP 11, notée Serv, ainsi qu'une pluralité de SBC 12-15 qui sont respectivement rattachés à des POP différents du réseau IP 10. Ce réseau est adapté pour fournir à des terminaux clients T1 à T11 un service qui peut être notamment un service de téléphonie. La présente invention peut être avantageusement mise en oeuvre dans tout réseau offrant un quelconque service de télécommunications, notamment un service qui requiert des contraintes similaires à celles qui sont requises par la téléphonie.

L'accès au réseau des terminaux clients T1 à T3 est géré par le POP auquel est rattaché le SBC 12, celui des terminaux clients T4 à T6 est géré par le POP auquel est rattaché le SBC 13, celui des terminaux clients T7 à T9 est géré par le POP auquel est rattaché le SBC 14 et celui des terminaux clients T10 et T11 est géré par le POP auquel est rattaché le SBC 15.

Par la suite, on entend par 'SBC principal' relativement à un terminal client donné, le SBC rattaché au POP en charge de gérer l'accès au réseau IP 10 de ce terminal client.

On entend par 'SBC de secours' relativement à un SBC principal, un SBC en charge de reprendre les fonctions dudit SBC principal en cas de panne ou de dysfonctionnement de ce dernier selon un mode de réalisation de la présente invention. Aucune limitation n'est attachée à la présente invention au regard du POP auquel sont respectivement rattachés le SBC principal et le SBC de secours lui correspondant : les POP respectifs peuvent correspondre à un même POP ou encore ils peuvent être distincts.

Dans un mode de réalisation de la présente invention, le routage IP est un routage dynamique, comme par exemple un routage basé sur un protocole de type OSPF (pour 'Open Shortest Path First') ou de type ISIS (pour 'Intermediate System to Intermediate System'), ou encore un protocole du type BGP (pour 'Border Gateway Protocol', en anglais).

Chaque SBC du réseau 10 est attaché à un routeur d'accès qui raccorde le réseau IP 10 aux terminaux clients. Ces routeurs d'accès mettent en oeuvre le routage dynamique. Lorsque plusieurs routes sont stockées dans la table de routage pour une même adresse, ces routeurs sont adaptés pour sélectionner une de ces routes sur la base de règles de sélection de route.

Dans le sens entrant, c'est à dire depuis les terminaux clients vers la plateforme de service 11, chaque SBC dispose d'une adresse principale, ainsi que d'une adresse secondaire dans le cas où il est prévu que ce SBC puisse jouer le rôle de SBC de secours pour un autre SBC du réseau 10, cette adresse secondaire correspondant à l'adresse principale du SBC pour lequel il joue le rôle de SBC de secours.

Dans le sens sortant, c'est-à-dire depuis le réseau IP 10 vers les terminaux clients du réseau, chaque SBC dispose d'une adresse de sortie qui est une adresse différente pour tous les SBC du réseau 10.

Dans un mode de réalisation de la présente invention, on prévoit qu'un SBC principal pour des terminaux clients donnés du réseau 10 dispose d'un SBC de secours différent de ce SBC principal, un SBC de secours étant également par ailleurs un SBC principal pour d'autres terminaux clients et ayant lui-même, à ce titre, un SBC de secours différent du SBC principal pour lequel il joue le rôle de SBC de secours. Ce mode de fonctionnement est référencé par la suite « mode unilatéral ». Dans un tel mode de fonctionnement unilatéral, les adresses suivantes sont associées au SBC X lorsque le SBC Y est le SBC de secours du SBC X :

- @Xin : l'adresse principale ;

- @Yin : l'adresse secondaire ; et

- @Xout : l'adresse de sortie.

En outre, on prévoit d'affecter également une adresse spécifique @IP_RTPX destinée à être utilisée pour la transmission de flux média, afin d'éviter que, dans le cas d'un basculement depuis le SBC de secours vers le SBC principal, en cours d'appel, lorsque le SBC principal redevient opérationnel, les flux média ne soient perdus.

Cette adresse spécifique @IP_RTPX peut être avantageusement utilisée aussi pour des requêtes subséquentes relatives à une session qui a été initiée sur le SBC de secours afin d'éviter que, lors du basculement depuis le SBC de secours vers le SBC principal selon un mode de réalisation de la présente invention, des requêtes subséquentes pour une telle session ne soient perdues. Le SBC de secours peut utiliser des mécanismes existants du protocole SIP, par exemple, pour informer les terminaux clients de cette utilisation d'adresse @IP_RTPX.

Les terminaux clients du POP auquel est rattaché le SBC X n'utilisent qu'une adresse, pour la signalisation, qui est l'adresse principale @Xin, ce qui garantit l'étanchéité du service.

La figure 2 illustre une telle gestion d'adresses dans le réseau IP 10, comprenant les SBC A et B, dans le cas où le SBC B est le SBC de secours du SBC A. Ici, l'adresse principale de SBC A, notée @Ain, est affectée à la fois au SBC A et au SBC B, en tant qu'adresse secondaire pour ce dernier, sur son interface côté terminal client dans le sens entrant. Les adresses principales d'entrée @Ain et @Bin sont respectivement utilisées par les terminaux clients du SBC A et du SBC B, T1 à T3 et T4 à T6. Un routeur Ra est attaché au SBC A et un routeur Rb est rattaché au SBC B.

Lorsque les SBC A et B sont opérationnels, le routeur Ra a dans sa table de routage, relativement à l'adresse @Ain, une première route qui conduit au SBC A et une seconde route qui conduit au SBC B.

De préférence, les adresses principales sont respectivement affectées aux différents SBC du réseau, selon un mécanisme bien connu de l'homme du métier, de telle sorte que, lorsque le SBC A est opérationnel, le routeur de raccordement Ra qui lui correspond sélectionne la première route.

Dans une variante de configuration du réseau en mode unilatéral, on peut prévoir que le SBC A dispose de deux SBC de secours, ou même plus, par exemple le SBC B et un SBC C (non représenté en figure 2). A chacun de ces deux SBC B et C de secours est affectée l'adresse principale de SBC A configurée sur ses interfaces dans le sens entrant, en tant qu'adresse secondaire.

Dans les annonces de route que le SBC B et le SBC C font relativement à leur adresse secondaire, des poids respectifs différents peuvent être affectés de telle sorte que, par exemple, en cas de défaillance du SBC A, le routeur sélectionne parmi les routes attachées à l'adresse principale du SBC A, celle qui conduit au SBC B. Dans ce cas, c'est seulement si le SBC B est également défaillant, que la route conduisant au SBC C est alors sélectionnée pour que le SBC C assure la fonction de secours du SBC A.

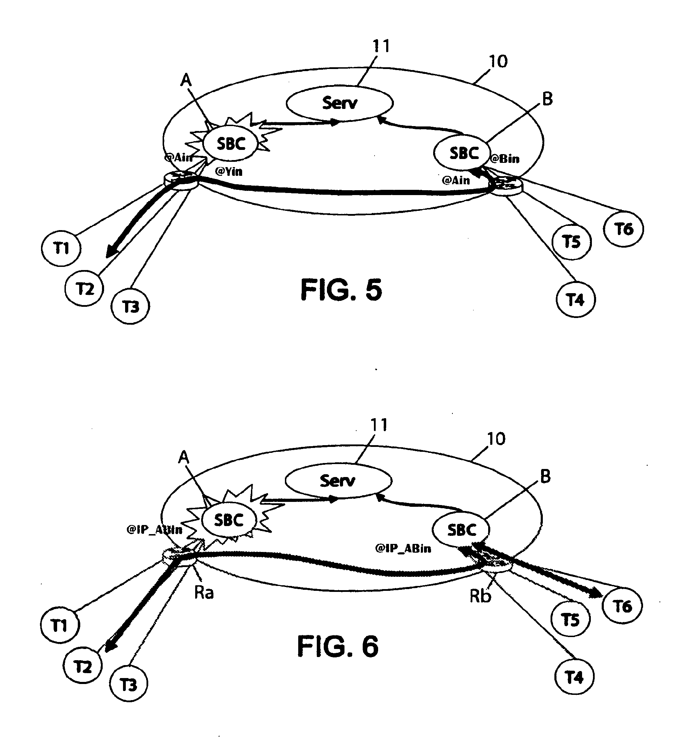

La figure 5 illustre l'application d'un mode de réalisation de la présente invention lorsqu'une panne se produit au niveau du SBC A dans une configuration similaire à celle illustrée en figure 2.

Lorsque le SBC A est opérationnel, la première route est affectée d'un niveau de priorité supérieur à celui qui est affecté à la seconde route qui mène à cette même adresse @Ain, mais qui conduit au SBC B. Par conséquent, le processus de routage sélectionne la route qui mène au SBC A.

Suite à la panne du SBC A, la route vers l'adresse @Ain qui mène au SBC A est retirée du processus de routage IP du routeur Ra. Ainsi, la route correspondant à cette adresse @Ain qui présente alors le niveau de priorité le plus élevé est celle qui mène au SBC B, auquel a été affectée l'adresse secondaire @Ain.

Ainsi, en cas de panne ou dysfonctionnement du SBC A, les messages émis par les utilisateurs T1, T2 et T3 sont acheminés jusqu'au SBC B.

Dans une variante qui est référencée par la suite en tant que mode de fonctionnement bilatéral, on peut prévoir d'organiser les SBC par paire, chacun étant le SBC de secours de l'autre, et vice-versa.

Dans ce contexte, dans le sens entrant, les SBC d'une même paire disposent d'une même adresse principale. Dans le sens sortant, chaque SBC dispose d'une adresse de sortie différente des adresses de sortie des autres SBC du réseau.

Ainsi, pour la paire des SBC A et SBC B, on a :

- pour le SBC A : @IP_ABin en tant qu'adresse principale, @IP_RTPA en tant qu'adresse de flux media, et @Aout en tant qu'adresse de sortie, et

- pour le SBC B : @IP_ABin en tant qu'adresse principale, @IP_RTPB en tant qu'adresse de flux media, et @Bout en tant qu'adresse de sortie.

Seule l'adresse principale est fournie aux terminaux clients attachés au POP du SBC considéré.

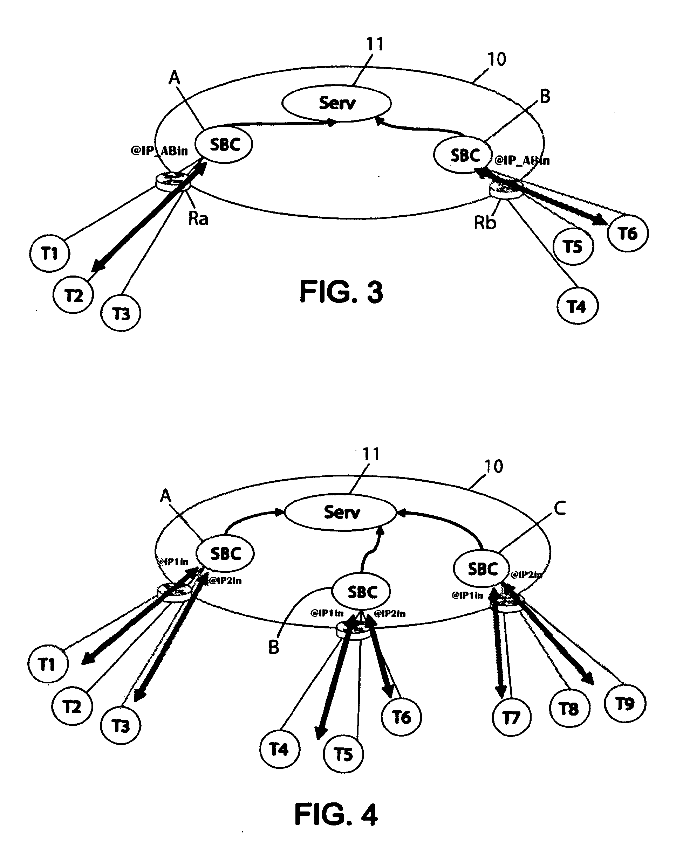

La figure 3 illustre une telle application d'un mode de réalisation de la présente invention. Le SBC A, rattaché au routeur Ra, est en charge de la gestion des terminaux clients T1 à T3 et le SBC B, rattaché au routeur Rb, est en charge de la gestion des terminaux clients T4 à T6.

En se basant sur le routage IP, comme énoncé ci-avant, lorsque les SBC A et B sont opérationnels, chacun des routeurs Ra et Rb a dans sa table de routage une première et une seconde route pour l'adresse principale. Dans ce contexte, le routeur Ra sélectionne pour l'adresse @IP_ABin la route qui conduit au SBC A et le routeur Rb sélectionne pour cette même adresse la route qui conduit au SBC B. Ainsi, les messages émis par les terminaux clients T1-T3 sont acheminés vers le SBC A et les messages émis par les terminaux T4-T6 sont acheminés vers le SBC B.

La figure 6 illustre l'application d'un mode de réalisation de la présente invention lorsqu'une panne se produit au niveau du SBC A dans une configuration similaire à celle illustrée en figure 3.

Lorsque le SBC A est considéré comme opérationnel au niveau du routeur d'accès du POP de raccordement de SBC A, la première route est affectée d'un niveau de priorité supérieur à celui qui est affecté à la seconde route qui correspond à cette même adresse @IP_ABin, mais qui conduit au SBC B. Par conséquent, au niveau du routeur d'accès du POP de raccordement de SBC A, le processus de routage sélectionne la route qui conduit au SBC A.

Suite à la panne du SBC A, la route vers l'adresse @IP_ABin qui mène au SBC A est retirée du processus de routage IP. Par conséquent, une nouvelle route pour l'adresse principale @IP_ABin est sélectionnée. La route correspondant à cette adresse @IP_APin qui présente alors le niveau de priorité le plus élevé est celle qui conduit au SBC B.

Ainsi, en cas de panne ou dysfonctionnement du SBC A, les messages émis par les utilisateurs T1, T2 et T3 sont acheminés vers le SBC B.

Dans un autre mode de réalisation de la présente invention, les SBC sont gérés par n-uplets pour mettre en oeuvre un mode de fonctionnement distribué. Dans ce mode de réalisation, la charge des terminaux clients d'un SBC en panne peut être distribuée sur les autres SBC du même n-uplet.

A cet effet, on répartit les terminaux clients gérés par un SBC en un nombre entier M de groupes. Les SBC appartenant à un même n-uplet, supportent le même nombre de groupes M, même s'ils ne gèrent pas le même nombre total de terminaux clients. Chacun de ces M groupes de terminaux clients peut donc comprendre des terminaux clients dont l'accès est géré par des POPs différents et donc des SBC différents.

Des adresses principales de groupe respectives distinctes, dans le sens entrant, sont alors associées à ces M groupes. Un terminal client utilise alors l'adresse principale de groupe associée au groupe auquel il appartient, pour émettre un message à destination du réseau 10.

De préférence, toutes les adresses principales de groupe sont configurées dans le sens entrant sur tous les SBC du n-uplet considéré, ces SBC assurant la fonction de secours les uns des autres, selon une répartition qui découle du processus de routage. Ainsi, dans le sens entrant, chaque SBC dispose des M adresses principales de groupe. Puis, dans le sens sortant, chaque SBC dispose d'une adresse de sortie différente des adresses de sortie des autres SBC.

Dans de telles conditions, si un SBC donné du n-uplet considéré tombe en panne, chacun des M groupes de terminaux clients qui était géré par ce SBC donné, peut alors être pris en charge par un autre SBC du n-uplet en tant que SBC de secours.

Dans ce contexte, il est possible de prévoir que les terminaux clients attachés au SBC en panne ne soient pas tous pris en charge par le même SBC du n-uplet considéré. On peut en effet avantageusement distribuer la charge liée à cette panne sur différents SBC du n-uplet et ainsi éviter des effets nuisibles d'avalanche.

Ainsi, dans un tel mode de réalisation de la présente invention, le réseau IP 10 peut comprendre un n-uplet de quatre SBC, SBC A, SBC B, SBC C et SBC D, et des POPs qui sont chacun organisé en trois groupes de terminaux clients.

Les adresses peuvent alors être allouées comme suit :

- pour le SBC A : @IP1in, @IP2in, @IP3in, @IP_RTPA, @Atout;

- pour le SBC B: @IP1in, @IP2in, @IP3in, @IP_RTPB, @Bout;

- pour le SCB C : @IP1in, @IP2in, @IP3in, @IP_RTPC, @Cout; et

- pour le SCB D : @IP1 in, @IP2in, @IP3in, @IP_RTPD, @Dout

où les adresses @IP1in, @IP2in et @IP3in sont des adresses IP affectées aux interfaces de terminal clientes des SBC A, B, C et D pour la gestion des trois groupes de terminaux clients par SBC ;

où les adresses @IP_RTPX sont les adresses pour l'envoi et la réception des flux médias et de requêtes subséquentes ; et

où les adresses @Aout, @Bout, @Cout et @Dout sont les adresses de sortie respectives.

Cette distribution est un exemple de configuration qui permet d'organiser chaque POP en trois sous-groupes de clients. A chaque sous-groupe, on affecte une adresse IP du triplet @IP1 in, @IP2in et @IP3in. Les adresses @IP_RTPx sont des adresses propres à chaque SBC, dans le sens entrant, pour l'envoi et la réception des flux médias et de requêtes subséquentes.

Une telle configuration permet avantageusement de répartir la surcharge due à une panne d'un SBC sur une pluralité de SBC en fonction du routage mis en place dans le réseau IP 10.

La figure 4 illustre un tel mode de réalisation de la présente invention dans lequel le réseau IP 10 comprend trois SBC, SBC A, B et C, gérant respectivement les terminaux clients T1- T3, T4-T6 et T7-T9 et étant rattachés respectivement à trois routeurs Ra, Rb et Rc.

Les terminaux clients de ces trois SBC sont répartis en deux groupes auxquels sont respectivement associées deux adresses principales de groupe, @IP1in et @IP2in. Dans ce contexte, les adresses principales de groupe fournies aux utilisateurs pour contacter le service offert dans le réseau sont @IP1in pour les utilisateurs T1, T2, T4, T5 et T7, et @IP2in pour les utilisateurs T3, T6, T8 et T9.

Sur la base des mêmes principes de routage que ceux énoncés précédemment, les routeurs Ra, Rb et Rc ont chacun dans leur table de routage trois routes pour chacune des adresses principales de groupe. Lorsque les SBC A, B et C sont tous opérationnels, le routeur Ra sélectionne la route conduisant au SBC A, le routeur Rb sélectionne la route qui conduit au SBC B et le routeur Rc sélectionne la route qui conduit au SBC C, à la fois pour l'adresse principale de groupe @IP1in et l'adresse principale de groupe @IP2in.

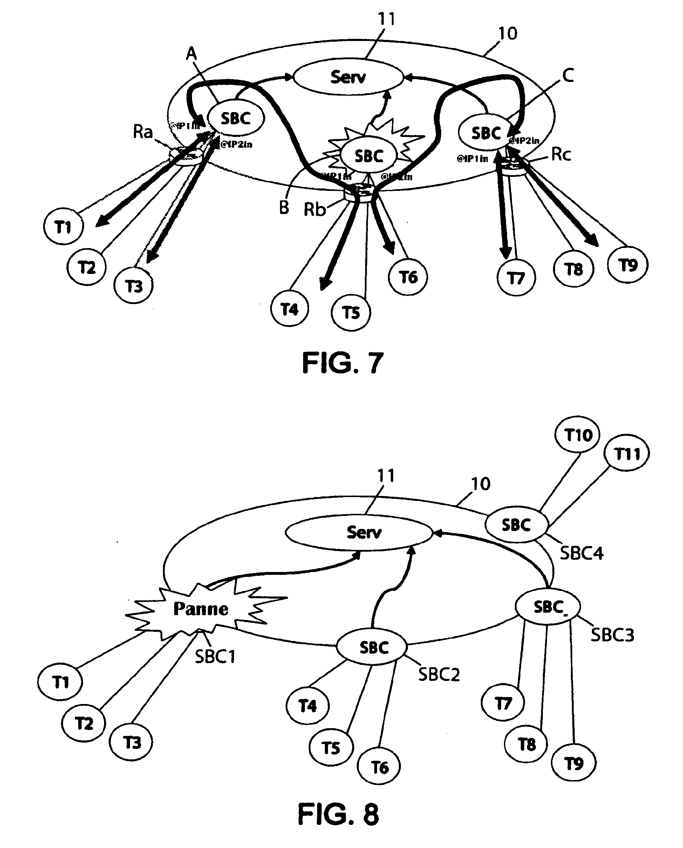

La figure 7 illustre l'application d'un mode de réalisation de la présente invention lorsqu'une panne se produit au niveau du SBC B dans une configuration similaire à celle illustrée en figure 4.

La route vers @IP1 in, respectivement @IP2in, qui conduit vers le SBC B, est alors retirée du processus de routage IP. Le routeur Rb sélectionne alors une nouvelle route pour cette adresse @IP1in, respectivement pour l'adresse @IP2in, pour les utilisateurs T4 et T5, respectivement l'utilisateur T6.

La nouvelle route sélectionnée peut conduire au SBC A pour l'adresse @IP1in, respectivement au SBC C pour l'adresse @IP2in. Ainsi, pendant que le SBC B n'est pas opérationnel, les terminaux clients T4 et T5 sont gérés par le SBC A et le terminal client T6 est géré par le SBC C.

Dans ces conditions, la surcharge que représente la gestion des terminaux clients d'un SBC en panne pour les autres SBC est avantageusement répartie entre les SBC de secours, les groupes de terminaux clients pouvant en effet être secourus par des SBC différents.

Ensuite, lorsque le SBC B redevient opérationnel, la route qui conduit à lui depuis les terminaux clients T4 à T6 est alors affectée du niveau de priorité le plus élevé au niveau de Rb et peut être sélectionnée à nouveau.

Le retour à la situation normale repose sur les mêmes principes que le passage au ou aux SBC de secours.

Quelque soit le mode de fonctionnement unilatéral, bilatéral, distribué ou encore une combinaison de ces modes, le basculement entre le SBC principal et le ou les SBC de secours est basé préférentiellement sur la détection d'un dysfonctionnement du SBC principal au niveau du routage. Plus précisément, dans un mode de réalisation de la présente invention, la détection de ce dysfonctionnement influe sur la sélection de la route attachée à l'adresse principale du SBC, parmi celles qui sont stockées dans la table de routage du routeur.

Ainsi, le basculement d'un SBC à un autre est fondé sur le protocole de routage utilisé et sa période de mise en oeuvre est directement liée au temps de convergence de ce protocole de routage.

Un tel basculement de SBC peut avantageusement rester transparent pour les terminaux clients.

Dans un mode de réalisation de la présente invention, les SBCs participent aux fonctions de routage mises en oeuvre au niveau du routeur auquel il est rattaché.

A cet effet, il est prévu que le SBC soit adapté pour mettre en oeuvre le protocole de routage mis en oeuvre par le routeur, ou tout au moins un protocole de routage qui est compatible avec celui du routeur.

Dans ce contexte, le SBC émet un message d'annonce de route à destination du routeur qui lui est associé, ce message annonçant un ajout, ou encore un retrait de route pour une adresse principale ou encore pour une adresse secondaire qui lui est affectée. L'annonce d'un retrait de route peut être faite au moment de la détection de panne dans le cas où la panne affectant le SBC n'affecte pas sa capacité à émettre de tel message d'annonce.

Dans une variante, ou en combinaison, on peut prévoir que le routeur est adapté pour mettre en oeuvre un protocole de détection de panne ou dysfonctionnement. Aucune limitation n'est attachée à la présente invention au regard de la méthode mise en oeuvre pour détecter ou encore simuler une panne dans le réseau IP 10 entre le SBC et son routeur de raccordement, l'utilisation du protocole BFD pouvant être avantageuse par exemple.

Dans un mode de réalisation de la présente invention, les SBC sont répartis dans le réseau 10 et les adresses principales et secondaires à affecter à ces SBC sont sélectionnées de telle façon que, pour un terminal client, la route sélectionnée par le processus de routage mis en oeuvre pour joindre un SBC soit celle qui conduise à son SBC principal, c'est-à-dire le SBC associé au POP qui gère son accès au réseau IP considéré, lorsqu'il est opérationnel.

En cas de panne ou de dysfonctionnement d'un SBC, ou encore dans le cas où le SBC considéré n'est pas joignable, des annonces de routes émises par ce SBC indiquent un retrait de route si le SBC met en oeuvre un protocole de routage, ou encore le routeur détecte que le SBC est hors service, par exemple en activant le protocole BFD, ou une combinaison de ces variantes.

Dans une telle configuration en mode distribué, un SBC peut être potentiellement secouru par n'importe quel autre SBC du n-uplet dans lequel il se trouve.

Un mode de réalisation de la présente invention permet de contrôler l'ordre dans lequel les SBC de secours d'un même n-uplet sont à solliciter. Il peut être en effet intéressant de pouvoir déterminer sur quel SBC de secours le premier basculement est tenté, puis, dans le cas où ce SBC de secours ne serait pas opérationnel, sur quel SBC de secours le deuxième basculement est tenté, et ainsi de suite.

Il convient à cet effet de prendre en compte les principes du processus de routage pour contrôler un tel ordre de consultation des SBC de secours en cas de dysfonctionnement du SBC principal, pour chaque groupe de terminaux clients et d'élaborer une stratégie de routage.

La figure 8 illustre un réseau 10 comprenant quatre SBC, le SBC 1 qui gère les terminaux clients T1-T3, le SBC 2 qui gère les terminaux clients T4-T6, le SBC 3 qui gère les terminaux T7-T9 et le SBC 4 qui gère les terminaux clients T10 et T11.

Les SBC 1 et 4 sont configurés selon un mode de réalisation de la présente invention en mode de fonctionnement bilatéral, c'est-à-dire qu'ils sont l'un pour l'autre un SBC de secours. Le SBC 1 a pour adresse principale @IP_14in, pour adresse de flux média @IP_RTP1, et pour adresse de sortie @1out ; et le SBC 4 a pour adresse principale @IP_14in, pour adresse de flux média @IP_RTP4, et pour adresse de sortie @4out.

Lorsque le SBC 1 subit un dysfonctionnement et que le temporisateur de réenregistrement du terminal client T1 expire, le terminal client envoie alors une requête d'enregistrement à destination de l'adresse @IP_14in. Cette requête d'enregistrement est acheminée jusqu'au SBC 4 qui procède à l'enregistrement de ce terminal client T1 auprès de la plateforme de service 11. Ainsi, la plateforme de service 11 enregistre le fait que le terminal client T1 est désormais joignable via le SBC 4 dans le sens sortant, afin d'adresser les prochains messages à l'adresse @4out.

Lorsque le terminal client T2 souhaite effectuer un appel vers le terminal client T9, il envoie un message d'initiation d'appel vers l'adresse @IP_14in qui est ensuite acheminé jusqu'au SBC 4. Lorsque cet appel est initié avant l'expiration du temporisateur de réenregistrement du terminal client T2, le SBC 4 ne connaît pas le terminal client T2. Par conséquent, il lui envoie un message d'erreur spécifique qui indique qu'un enregistrement préalable est requis.

Sur réception de ce message, le terminal client T2 s'enregistre auprès de SBC 4. Le terminal client T2 peut alors réémettre le message INVITE vers le terminal client T9. L'appel est ensuite traité de manière classique.

Dans un autre scénario, le terminal client T7 initie un appel vers le terminal client 3, qui ne s'est pas encore enregistré auprès de SBC 4. La plateforme de service 11 relaie donc la requête vers l'adresse @1out, qui est donc transmise au SBC 1 qui n'est pas opérationnel. L'initiation de l'appel échoue par conséquent.

Dans ce même réseau, lorsque le terminal client 7 initie un appel vers le terminal client T3 après que ce dernier se soit enregistré auprès du SBC 4, soit sur expiration du temporisateur de réenregistrement, soit encore sur échec d'un appel initié, la plateforme de service 11 dispose alors des informations relatives ce terminal client 3. Elle relaie donc le message d'initiation d'appel vers l'adresse @4out. Le SBC 4 peut alors la transmettre au terminal client T3. La suite de l'appel peut ainsi se dérouler classiquement.

Lorsque SBC1 est à nouveau opérationnel, les mêmes principes s'appliquent aisément pour revenir à la situation initiale.

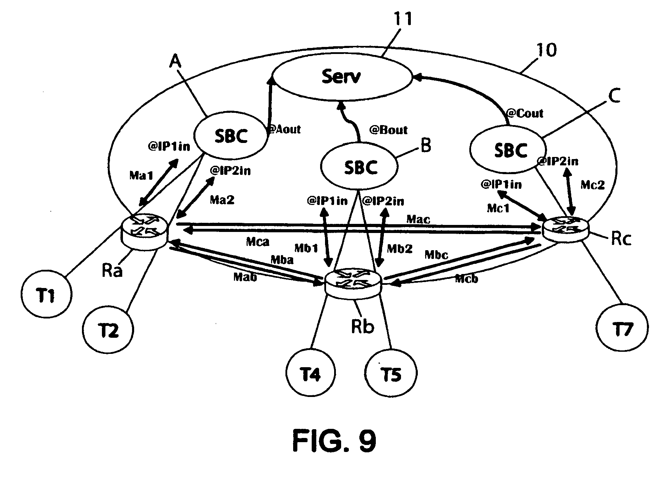

La figure 9 illustre un exemple d'application de l'invention dans le mode de fonctionnement distribué. Le réseau 10 comprend ici les SBC A, SBC B et SBC C, dont les terminaux clients T1 et T2, les terminaux clients T4 et T5, et le terminal client T7, respectivement, sont répartis en deux groupes, un premier groupe comprenant les terminaux clients T1 et T4, et un second groupe comprenant les terminaux clients T2, T5 et T7. L'adresse principale de groupe associée au premier groupe est @IP1in et l'adresse principale de groupe associée au second groupe est @IP2in.

La distribution d'adresses suivante s'applique :

- pour le SBC A : @IP1 in en tant qu'adresse principale, @IP2in en tant qu'adresse secondaire, @IP_RTPA en tant qu'adresse pour les flux média, et @Aout en tant qu'adresse de sortie;

- pour le SBC B : @IP1 in en tant qu'adresse principale, @IP2in en tant qu'adresse secondaire, @IP_RTPB en tant qu'adresse pour les flux média, et l'adresse de sortie @Bout en tant qu'adresse de sortie ;

- pour le SCB C : @IP1in en tant qu'adresse principale, @IP2in en tant qu'adresse secondaire, @IP_RTPC en tant qu'adresse pour les flux média, et @Cout en tant qu'adresse de sortie.

Les SBC A, SBC B et SBC C sont rattachés à leurs routeurs de raccordement respectifs Ra, Rb et Rc.

La stratégie d'ingénierie peut avantageusement reposer sur une utilisation des métriques. Elle peut être mise en oeuvre sur la base d'un protocole du type IGP pour 'Interior Gateway Protocol'.

On note ainsi Mxy, la métrique entre le SBC X et son routeur $R_x$ pour l'adresse principale de groupe du premier groupe @IPyin, pour x correspondant à a, b ou c ; y correspondant à 1 ou 2, et X correspondant à A, B ou C.

On note Mwz, la métrique entre $R_w$ et $R_z$, où w et z correspondent respectivement à a, b ou c avec w≠z.

Afin de garantir que, en cas de défaillance du SBC A, les terminaux clients du groupe 1 soient pris en charge par le SBC B en tant que SBC de secours, et les terminaux clients du groupe 2 soient pris en charge par le SBC C en tant que SBC de secours, on peut prévoir d'affecter les métriques Mxy, de telle sorte qu'elles vérifient les conditions suivantes, où ">" signifie "est une meilleure métrique que"):

$$Ma1 > Mab + Mb1$$

$$Ma1 > Mac + Mc1$$

$$Ma2 > Mab + Mb2$$

$$Ma2 > Mac + Mc2$$

En outre, les terminaux clients du premier groupe du SBC A, sont gérés par le SBC B en tant que SBC de secours lorsqu'ils utilisent l'adresse @IP1in, quand la condition suivante est respectée :

$$Mab + Mb1 > Mac + Mc1$$

A partir du cas énoncé ci-avant en référence au SBC A, des règles similaires peuvent être déduites pour les SBC B et C.

De telles règles de métrique permettent, dans une configuration de mode distribué, de maîtriser l'ordre d'invocation des SBC de secours par groupe de terminaux clients, en influant sur le processus de routage en conséquence. Cependant, il convient de noter qu'un tel calcul de métriques induit une complexité croissante avec le nombre de SBC par n-uplet et le nombre de groupes de terminaux clients.

A partir des modes de réalisation précédemment décrits ci-avant, tel que le mode unilatéral, le mode bilatéral ou encore le mode distribué, il est aisé de déduire d'autres configurations avantageuses, par exemple sur la base de combinaison des différents modes. La présente invention ne se limite pas aux exemples décrits.

Ainsi, grâce aux dispositions présentées ci-avant, un mode de réalisation de la présente invention reposant sur des mécanismes de routage existants dans les réseaux IP, peut être mise en oeuvre simplement, tout en fournissant un niveau de fiabilisation élevé, pour un coût réduit.

Afin de séparer les interfaces de service et les interfaces de gestion au niveau d'un SBC, on peut également prévoir qu'une adresse de gestion, ou encore adresse de management, soit attribuée aux SBC de telle sorte qu'un SBC émulant une interface de service en panne peut être toujours joignable via cette adresse de gestion.

Avantageusement, une mise en oeuvre de la présente invention ne requiert pas un échange d'informations entre le SBC principal et le SBC de secours correspondant, le basculement vers le SBC de secours pouvant être réalisé sans notification, de manière sensiblement automatique.

La présente invention permet une organisation des fonctions de secours beaucoup plus souple que les schémas classiques évoqués ci-avant. Ceci permet notamment d'adapter la fiabilisation de l'architecture et du service en fonction de critères propres de la gestion du réseau considéré.

## Revendications

1. Procédé de gestion d'un service offert à un utilisateur d'un terminal (T1) dans un réseau (10) comprenant au moins des premier et second contrôleurs de session en bordure (A, B),
   au moins une adresse identique (@Ain) étant affectée aux premier et second contrôleurs de session en bordure,
   un routeur (Ra) raccordant le terminal (T1) au premier contrôleur de session en bordure (4) et étant adapté pour gérer dynamiquement une table de routage indiquant au moins des première et seconde routes pour ladite adresse,
   dans lequel un message émis depuis le terminal à destination de ladite adresse du réseau est reçu au niveau du premier contrôleur de session en bordure lorsque le routeur sélectionne la première route et au niveau du second contrôleur de session en bordure lorsque le routeur sélectionne la seconde route.

2. Procédé de gestion de service selon la revendication 1, dans lequel ladite seconde route est sélectionnée sur détection d'un dysfonctionnement du premier contrôleur de session en bordure.

3. Procédé de gestion de service selon la revendication 2, dans lequel le routeur (Ra) et le premier contrôleur de session en bordure (A) mettent en oeuvre respectivement un protocole de routage similaire et dans lequel la detection de dysfonctionnement du premier contrôleur de session en bordure est realisée sur la base d'informations de routage échangées selon l'un au moins desdits protocoles de routage.

4. Procédé de gestion de service selon la revendication 1 ou 2, dans lequel le routeur (Ra) met en oeuvre un processus de détection de panne et la détection de dysfonctionnement du premier contrôleur de session en bordure (A) est réalisée sur la base dudit processus de détection.

5. Procédé de gestion de service selon l'une quelconque des revendications précédentes, le réseau comprenant N contrôleurs de session en bordure,
   chacun gérant M groupes de terminaux, M adresses (@IP1in, @IP2in) du réseau étant respectivement associées aux M groupes de terminaux ; lesdites M adresses du réseau étant affectées à chacun des contrôleurs de session en bordure, N et M étant des nombres entiers,
   dans lequel la table de routage du routeur indique N routes pour chacune des M adresses ; et
   dans lequel un message émis depuis le terminal (T1) à destination du réseau (10) est reçu au niveau du premier contrôleur de session en bordure (A) lorsque le routeur (Ra) sélectionne la première route et au niveau d'un autre contrôleur de session en bordure, en tant que second contrôleur de session en bordure, parmi les N-1 contrôleurs de session en bordure lorsque le routeur (Ra) sélectionne l'une des autres routes en tant que seconde route.

6. Procédé de gestion de service selon l'une quelconque des revendications précédentes, dans lequel les étapes suivantes sont mises en oeuvre au niveau du second contrôleur de session en bordure :

   /1/ recevoir un message d'initiation d'appel en tant que premier message depuis le terminal ;
   /2/ émettre un message d'erreur spécifique à destination du terminal ; et
   /3/ recevoir un message d'enregistrement du terminal auprès dudit second contrôleur de session en bordure.

7. Procédé de gestion de service selon l'une quelconque des revendications précédentes, dans lequel une adresse spécifique est affectée au second contrôleur de session en bordure,
   ledit procédé comprenant les étapes suivantes, au niveau du second contrôleur de session en bordure :

   /a/ recevoir un message d'initiation d'appel depuis le terminal client ;

/b/ émettre un message d'information à destination du terminal client indiquant ladite adresse spécifique ;

lesdits messages suivants émis par ledit terminal client étant envoyés à destination de ladite adresse spécifique.

8. Système de gestion d'un service offert à un utilisateur d'un terminal (T1) ledit système comprenant :

- au moins des premier et second contrôleurs de session en bordure (A, B) ; au moins une adresse identique (@Ain) étant affectée aux premier et second contrôleurs de session en bordure,
- un routeur (Ra) raccordant le terminal (T1) au premier contrôleur de session en bordure (A) et étant adapté pour gérer dynamiquement une table de routage indiquant au moins des première et seconde routes pour ladite adresse,

dans lequel, lorsque le routeur sélectionne la première route, un message émis depuis le terminal à destination de ladite adresse du réseau est reçu au niveau du premier contrôleur de session en bordure et lorsque le routeur sélectionne la seconde route, un message émis depuis le terminal à destination de ladite adresse du réseau est reçu au niveau du second contrôleur de session en bordure.

**Patentansprüche**

1. Verfahren zur Verwaltung eines einem Benutzer eines Endgeräts (T1) in einem Netzwerk (10) angebotenen Diensts, das mindestens erste und zweite Session Border Controller (A, B) enthält, wobei mindestens eine gleiche Adresse (@Ain) den ersten und zweiten Session Border Controllern zugewiesen ist, wobei ein Router (Ra) das Endgerät (T1) an den ersten Session Border Controller (A) anschließt und geeignet ist, um dynamisch eine Routing-Tabelle zu verwalten, die mindestens erste und zweite Routen für die Adresse angibt, wobei eine vom Endgerät an die Adresse des Netzwerks gesendete Mitteilung auf der Ebene des ersten Session Border Controllers empfangen wird, wenn der Router die erste Route wählt, und auf der Ebene des zweiten Session Border Controllers empfangen wird, wenn der Router die zweite Route wählt.

2. Dienstverwaltungsverfahren nach Anspruch 1, wobei die zweite Route bei Erfassung einer Funktionsstörung des ersten Session Border Controllers gewählt wird.

3. Dienstverwaltungsverfahren nach Anspruch 2, wobei der Router (Ra) und der erste Session Border Controller (A) je ein gleiches Routing-Protokoll anwenden, und wobei die Erfassung einer Funktionsstörung des ersten Session Border Controllers auf der Basis von Routing-Informationen durchgeführt wird, die gemäß mindestens einem der Routing-Protokolle ausgetauscht werden.

4. Dienstverwaltungsverfahren nach Anspruch 1 oder 2, wobei der Router (Ra) ein Pannenerfassungsprozess anwendet, und die Erfassung einer Funktionsstörung des ersten Session Border Controllers (A) auf der Basis des Erfassungsprozess durchgeführt wird.

5. Dienstverwaltungsverfahren nach einem der vorhergehenden Ansprüche, wobei das Netzwerk N Session Border Controller enthält, die je M Endgerätegruppen verwalten, wobei M Adressen (@IP1in, @IP2in) des Netzwerks je den M Endgerätegruppen zugeordnet sind; wobei die M Adressen des Netzwerks jedem der Session Border Controller zugewiesen sind, wobei N und M ganze Zahlen sind, wobei die Routing-Tabelle des Routers N Routen für jede der M Adressen angibt; und wobei eine vom Endgerät (T1) an das Netzwerk (10) gesendete Mitteilung auf der Ebene des ersten Session Border Controllers (A) empfangen wird, wenn der Router (Ra) die erste Route wählt, und auf der Ebene eines anderen Session Border Controllers als zweiter Session Border Controller unter den N-1 Session Border Controllern empfangen wird, wenn der Router (Ra) eine der anderen Routen als zweite Route wählt.

6. Dienstverwaltungsverfahren nach einem der vorhergehenden Ansprüche, wobei die folgenden Schritte auf der Ebene des zweiten Session Border Controllers angewendet werden:

/1/Empfang einer Rufauslösungsmitteilung als erster Mitteilung vom Endgerät;
/2/Senden einer spezifischen Fehlermitteilung an das Endgerät; und
/3/Empfang einer Mitteilung der Registrierung des Endgeräts im zweiten Session Border Controller.

7. Dienstverwaltungsverfahren nach einem der vorhergehenden Ansprüche, wobei eine spezifische Adresse dem zweiten Session Border Controller zugewiesen wird, wobei das Verfahren die folgenden Schritte auf der Ebene des zweiten Session Border Controllers enthält:

/a/Empfang einer Rufauslösungsmitteilung vom Client-Endgerät;
/b/Senden einer Informationsmitteilung an das Client-Endgerät, die die spezifische Adresse angibt;

wobei die folgenden vom Client-Endgerät gesendeten Mitteilungen an die spezifische Adresse geschickt werden.

8. System zur Verwaltung eines einem Nutzer eines Endgeräts (T1) angebotenen Diensts, wobei das System enthält:

- mindestens erste und zweite Session Border Controller (A, B); wobei mindestens eine gleiche Adresse (@Ain) den ersten und zweiten Session Border Controllern zugewiesen ist,
- einen Router (Ra), der das Endgerät (T1) an den ersten Session Border Controller (A) anschließt und geeignet ist, um dynamisch eine Routing-Tabelle zu verwalten, die mindestens erste und zweite Routen für die Adresse angibt,

wobei, wenn der Router die erste Route wählt, eine vom Endgerät an die Adresse des Netzwerks gesendete Mitteilung auf der Ebene des ersten Session Border Controllers empfangen wird, und wenn der Router die zweite Route wählt, eine vom Endgerät an die Adresse des Netzwerks gesendete Mitteilung auf der Ebene des zweiten Session Border Controllers empfangen wird.

**Claims**

1. Method for managing a service offered to a user of a terminal (T1) in a network (10) comprising at least first and second border session controllers (A, B), at least one identical address (@Ain) being assigned to the first and second border session controllers, a router (Ra) connecting the terminal (T1) to the first border session controller (A) and being adapted for dynamically managing a routing table indicating at least first and second routes for said address, in which a message sent from the terminal destined for said address of the network is received at the level of the first border session controller when the router selects the first route and at the level of the second border session controller when the router selects the second route.

2. Service management method according to Claim 1, in which said second route is selected on detection of a malfunction of the first border session controller.

3. Service management method according to Claim 2, in which the router (Ra) and the first border session controller (A) implement respectively a similar routing protocol and in which the detection of malfunction of the first border session controller is carried out on the basis of routing information exchanged according to at least one of said routing protocols.

4. Service management method according to Claim 1 or 2, in which the router (Ra) implements a fault detection process and the detection of malfunction of the first border session controller (A) is carried out on the basis of said detection process.

5. Service management method according to any one of the preceding claims, the network comprising N border session controllers, each managing M groups of terminals, M addresses (@IP1in, @IP2in) of the network being respectively associated with the M groups of terminals; said M addresses of the network being assigned to each of the border session controllers, N and M being integers, in which the routing table of the router indicates N routes for each of the M addresses; and in which a message sent from the terminal (T1) destined for the network (10) is received at the level of the first border session controller (A) when the router (Ra) selects the first route and at the level of another border session controller, in the guise of second border session controller, from among the N-1 border session controllers when the router (Ra) selects one of the other routes in the guise of second route.

6. Service management method according to any one of the preceding claims, in which the following steps are implemented at the level of the second border session controller:

/1/ receive a call initiation message in the guise of first message from the terminal;
/2/ send a specific error message destined for the terminal; and
/3/ receive a message registering the terminal with said second border session controller.

7. Service management method according to any one of the preceding claims, in which a specific address is assigned to the second border session controller, said method comprising the following steps, at the level of the second border session controller:

/a/ receive a call initiation message from the client terminal;
/b/ send an information message destined for the client terminal indicating said specific address;

said following messages sent by said client terminal being forwarded to said specific address.

8. System for managing a service offered to a user of a terminal (T1), said system comprising:

    - at least first and second border session controllers (A, B); at least one identical address (@Ain) being assigned to the first and second border session controllers,
    - a router (Ra) connecting the terminal (T1) to the first border session controller (A) and being adapted for dynamically managing a routing table indicating at least first and second routes for said address,

in which, when the router selects the first route, a message sent from the terminal destined for said address of the network is received at the level of the first border session controller and when the router selects the second route, a message sent from the terminal destined for said address of the network is received at the level of the second border session controller.

FIG. 1

FIG. 2

FIG. 3

FIG. 4

FIG. 5

FIG. 6

FIG. 7

FIG. 8

**FIG. 9**

**EP 2 119 196 B1**

## RÉFÉRENCES CITÉES DANS LA DESCRIPTION

**Documents brevets cités dans la description**

- WO 2006128147 A

- CN 1870689

**Littérature non-brevet citée dans la description**

- **J. HAUTAKORPI et al.** *Requirements from Session Initiation Protocol Session Border Control Deployments,* Novembre 2006